# EUROPÄISCHE PATENTSCHRIFT

(11) **EP 0 930 402 B1**
(45) Veröffentlichungstag und Bekanntmachung des Hinweises auf die Patenterteilung: **02.04.2003**
(21) Anmeldenummer: 98123422.2
(22) Anmeldetag: 09.12.1998
(51) Int. Cl.: E03C 1/05, F16K 31/40

(54) **Magnetventil, insbesondere für sanitäre Armaturen**
Magnetic valve, particularly for sanitary fittings
Valve magnétique, en particulier pour des installations sanitaires

(30) Priorität: 16.01.1998 DE 29800536 U
(43) Veröffentlichungstag der Anmeldung: 21.07.1999
(73) Patentinhaber: A. und K. Müller GmbH & Co. KG, 40595 Düsseldorf (DE)
(72) Erfinder: Denkena, Karl-Heinz Dipl.-Ing., 40593 Düsseldorf (DE); Eichholz, Heinz-Dieter Dr.-Ing., 58642 Iserlohn (DE)
(74) Vertreter: Feder, Wolf-Dietrich, Dr. Dipl.-Phys.

(56) Entgegenhaltungen:
- EP-A- 0 391 765
- DE-A- 2 257 468
- DE-A- 4 341 649
- DE-A- 4 420 332
- DE-U- 29 614 645

## Beschreibung

Die Erfindung bezieht sich auf ein Magnetventil, insbesondere für sanitäre Armaturen mit den Merkmalen aus dem Oberbegriff des Patentanspruchs 1. Ein derartiges Magnetventil ist bekannt und in dem DE-GM 29 614 645 beschrieben. Magnetventile in dieser geschlossenen und dichten Bauform werden auch als Kartuschen-Magnetventile bezeichnet.

Wenn ein solches Magnetventil zum Ein- und Ausschalten einer sanitären Armatur eingesetzt wird und das Ein- und Ausschalten von berührungslos betätigbaren elektronischen Betätigungselementen aus erfolgen soll, benötigt man zur Auslösung des Wasserflusses neben der Ventilfunktion einen opto-elektronischen Sensor sowie eine Steuerelektronik. Es ist aus der oben zitierten Druckschrift bekannt, im Ventilgehäuse eine Elektronik-Leiterplatte anzuordnen. Bei dem bekannten Ventil muß der dazugehörige opto-elektronische Sensor jedoch separat als eigenständige Baugruppe im Armaturengehäuse untergebracht werden und über ein Kabel mit der Steuerelektronik des Magnetventils verbunden werden. Der Platzbedarf für den Sensor, einschließlich Kabel mit Steckverbinder, kann jedoch designabhängig nicht immer zur Verfügung gestellt werden.

Der Erfindung liegt die Aufgabe zugrunde, ein Magnetventil mit den Merkmalen aus dem Oberbegriff des Patentanspruchs 1 so auszubilden, daß der Sensor in das Magnetventil integriert ist, um so einen einfachen, kostengünstigen und platzsparenden Einbau sämtlicher, für die elektronische Ansteuerung benötigter Komponenten zu ermöglichen und eine Baugruppe zu schaffen, deren Gesamtfunktion überprüfbar ist.

Die Lösung dieser Aufgabe geschieht erfindungsgemäß mit einem Magnetventil mit den Merkmalen des Patentanspruchs 1. Vorteilhafte Weiterbildungen des erfindungsgemäßen Magnetventils sind in den abhängigen Ansprüchen beschrieben.

Somit enthält das erfindungsgemäße Kartuschen-Magnetventil innerhalb seines rotationssymmetrischen Aufbaus neben der kompletten Ventilfunktion auch die gesamte Steuerung einschließlich der Sensorik.

Bei einer besonders vorteilhaften Ausführungsform des erfindungsgemäßen Magnetventils ist das Sensorelement, bzw. sind die Sensorelemente innerhalb eines eigenen Sensorgehäuses in wasserdicht vergossener Form angeordnet. Dieses Sensorgehäuse besitzt eine für IR-Licht durchlässige Vorderwand, die in einen Ausschnitt der Seitenwand des Ventilgehäuses eingepaßt und dort befestigt ist. Um die Sensorelemente besonders platzsparend innerhalb des Ventilgehäuses unterzubringen, ist es weiterhin vorteilhaft, wenn das Sensorgehäuse räumlich einerseits zwischen dem Steuerteil und der Seitenwand des Ventilgehäuses und andererseits oberhalb des Steuerteils angeordnet ist.

Um die Anordnung einer aus der Armatur herauszuführenden Zuleitung zu einer Energiequelle, also einer Batterie oder einem Netzgerät zu vermeiden, ist es vorteilhaft, wenn innerhalb des Ventilgehäuses zusätzlich eine Batterie zur Energieversorgung der gesamten Ventilsteuerung angeordnet ist.

Weiterhin hat sich eine Bauform des Magnetventils als zweckmäßig erwiesen, bei der das Ventilgehäuse ein die Sensoren tragendes kappenartiges Gehäuseoberteil besitzt, das auf ein Gehäuseunterteil aufgesetzt ist, an dessen Unterseite der Ventileingang sowie der Ventilausgang angeordnet sind. Da das Ventilgehäuse beim Einbau des Magnetventils mit seinem Befestigungsgewindeabschnitt in eine Ventilaufnahme eingeschraubt wird, ist es vorteilhaft sicherzustellen, daß nach dem vollständigen Einschrauben beim festen Sitz des Ventils in der Aufnahme die optischen Achsen der Sensorelemente genau in die gewünschte Richtung weisen. Hier hat es sich als zweckmäßig erwiesen, wenn auf das Gehäuseunterteil ein mit einer Verzahnung am äußeren Umfang versehener Adapterring einrastend aufgesetzt ist, auf den das mit einer entsprechenden Verzahnung am inneren Umfang versehene kappenartige Gehäuseoberteil in unterschiedlicher Winkelstellung in bezug auf die Gehäuseachse aufsetzbar ist. Auf diese Weise kann das Gehäuseoberteil in einer Stellung aufgesetzt werden, in der bei festgeschraubtem Ventil die optischen Achsen in die richtige Richtung weisen.

Im folgenden wird anhand der beigefügten Zeichnungen ein Ausführungsbeispiel für das erfindungsgemäße Magnetventil und für seine Anordnung innerhalb einer sanitären Armatur näher erläutert.

In den Zeichnungen zeigen:
Fig. 1 das Magnetventil in einem Längsschnitt durch die Gehäuseachse;
Fig. 2 das Magnetventil nach Fig. 1 in einer Vorderansicht;
Fig. 3 eine Sanitärarmatur mit einem eingesetzten Ventil nach Fig. 1 und 2.

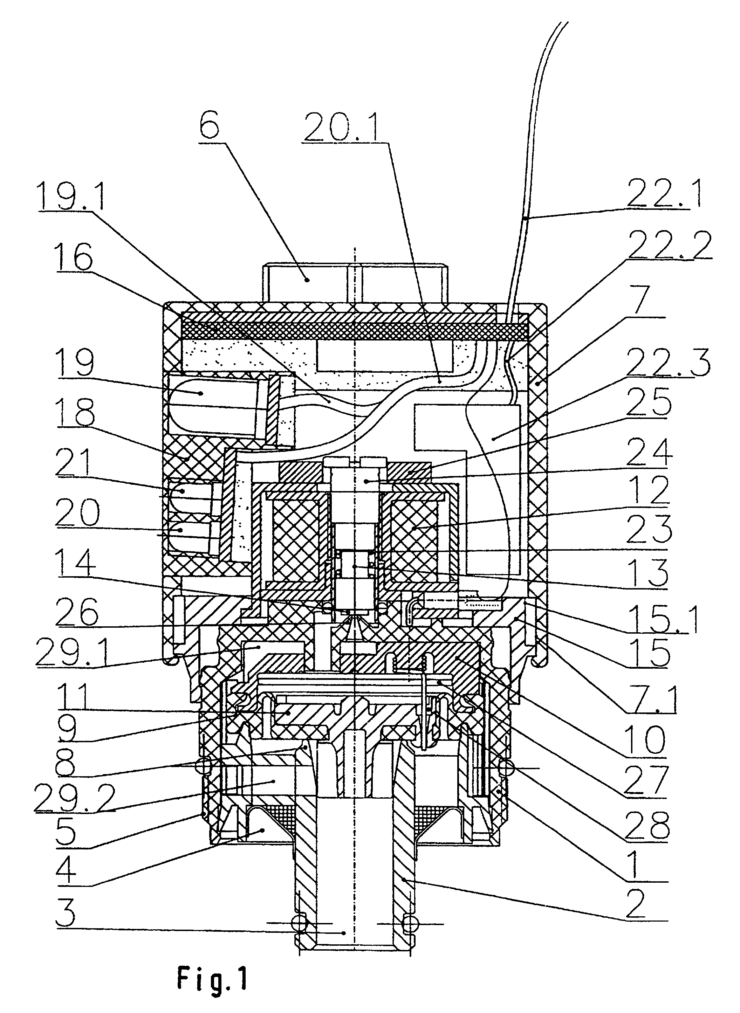

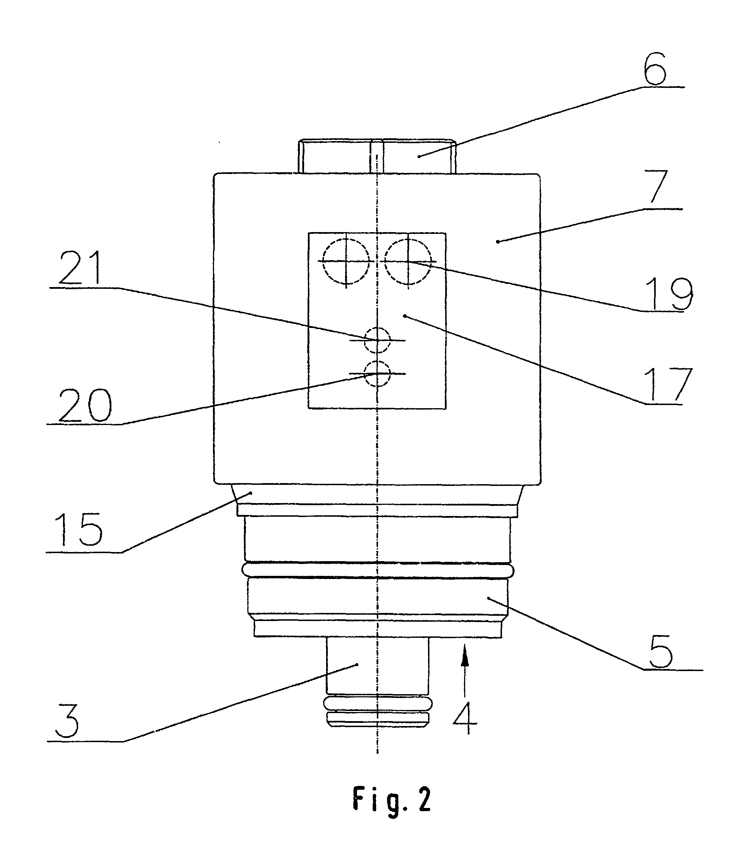

Das in den Fig. 1 und 2 dargestellte Magnetventil besitzt ein Gehäuseunterteil 1 mit einem Ventileingang 4 und einem Ventilausgang 3, die koaxial zueinander und zur Gehäuseachse 2 derart angeordnet sind, daß die Ein- und Ausströmrichtungen entgegengesetzt zueinander ausgerichtet sind. Das Gehäuseteil 1 besitzt weiterhin im Bereich seines unteren Randes einen Befestigungsgewindeabschnitt 5.

Auf das Gehäuseunterteil 1 ist ein Adapterring 15 einrastend aufgesetzt, der an seinem äußeren Umfang eine Verzahnung 15.1 trägt. Auf den Adapterring 15 kann in unterschiedlichen Winkelstellungen bezüglich der Gehäuseachse 2 ein kappenartiges Gehäuseoberteil 7 einrastend aufgesetzt werden, das an seinem unteren Rand am inneren Umfang eine entsprechende Verzahnung 7.1 aufweist.

Im Gehäuseunterteil 1 ist ein Ventilsitz 8 angeordnet, auf den sich ein Ventilteller in Form einer Membran 9 auflegen kann, die auf eine Adapterplatte 10 aufgeknöpft ist und in die eine Membranführung 11 eingesetzt ist. Weiterhin ist auf das Gehäuseunterteil 1 ein Elektromagnet 12 aufgesetzt, in dem ein Plunger 13 geführt ist, der an seinem unteren Ende eine Dichtung 14 trägt, mittels der eine Vorsteuerdüse 26 an der Oberseite des Gehäuseunterteils 1 geöffnet oder verschlossen werden kann. Der Raum zwischen dem Plunger 13 und der Vorsteuerdüse 26 ist mit einer hinter der Membran 9 angeordneten Gegendruckkammer 27 verbunden, die ihrerseits über einen seitlich in der Membran 9 angeordneten Kanal 28 mit dem Ventileingang 4 verbunden ist. Andererseits ist der Raum zwischen der Vorsteuerdüse 26 und dem Plunger 13 bei geöffneter Vorsteuerdüse 26 über Durchbrüche 29.1 und 29.2 mit dem Ventilausgang 3 verbunden.

Der im wesentlichen aus dem Elektromagnet 12, dem Plunger 13 und dem Permanentmagneten 25 bestehende Steuerteil ist im Innenraum des kappenartigen Gehäuseoberteils 7 angeordnet und sein Außendurchmesser ist kleiner als der Innendurchmesser des Gehäuseoberteils 7. Wie aus Fig. 1 ersichtlich, entsteht sowohl zwischen diesem Steuerteil und der Seitenwand des Gehäuseoberteils 7 ein ringförmiger Zwischenraum als auch ein Raum oberhalb des Steuerteils, der zur Aufnahme weiterer Bauelemente geeignet ist. So ist im Gehäuseoberteil 7 direkt vor der oberen Wand der Kappe eine Elektronik-Leiterplatte 16 angeordnet, welche die wasserdicht vergossene Steuerelektronik trägt.

Weiterhin ist räumlich zwischen dem Steuerteil und der Seitenwand des Gehäuseoberteils 7 ein Sensorgehäuse 18 angeordnet, das mit seiner Vorderwand, die aus einem für IR-Licht durchlässigen Material besteht, in einen Ausschnitt 17 des Gehäuseoberteils 7 eingepaßt und durch Rastverbindungen dort festgelegt ist. In dem Sensorgehäuse 18 sind opto-elektronische Sensorelemente in Form eines Senders 19, eines Empfängers 20 und einer Melde-Diode 21 angeordnet, die mit dem Sensorgehäuse 18 wasserdicht vergossen sind. Die Sensorelemente 19, 20 und 21 sind über Kabelverbindungen 19.1 und 20.1 mit der Steuerelektronik auf der Elektronik-Leiterplatte 16 verbunden. Weiterhin ist die Steuerelektronik mit dem Elektromagneten 12 des Steuerteils verbunden. Über ein aus dem Gehäuseoberteil 7 herausgeführtes Anschlußkabel 22.1 kann das Magnetventil an eine Energieversorgungseinheit angeschlossen werden.

In Fig. 1 ist angedeutet, daß die Energieversorgung des Magnetventils auch von einer im Raum zwischen dem Steuerteil und der Seitenwand des Gehäuseoberteils 7 bzw. oberhalb des Steuerteils angeordneten Batterie 22.3 erfolgen kann, an welche das Magnetventil über eine Verdrahtung 22.2 angeschlossen ist. In diesem Fall kann das Anschlußkabel 22.1 wegfallen.

Die Sensorelemente 19, 20 und 21 sind im Sensorgehäuse 18 derart angeordnet, daß bei vertikaler Einbaulage des Ventils ihre optischen Achsen um 2° bis 5° aus der horizontalen Richtung nach oben weisen.

Außen an der Oberseite des Gehäuseoberteils 7 ist eine Sechskantkontur 6 angeordnet, die, wie weiter unten beschrieben, zum Einschrauben des Magnetventils in eine Ventilaufnahme eines Armaturengehäuses dient.

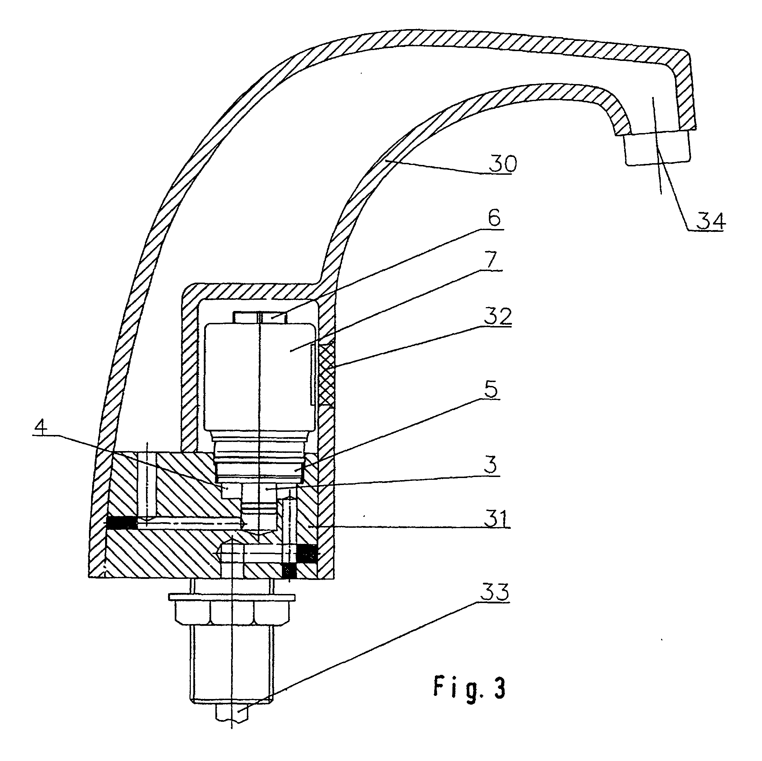

Eine derartige Einbaumöglichkeit ist in Fig. 3 dargestellt. In den Durchgangsweg der Armatur 30 ist das Magnetventil eingebaut, indem es mittels des Befestigungsgewindeabschnittes 5 in eine ein entsprechendes Gewinde tragende Ventilaufnahme 31 eingeschraubt ist, wobei das entsprechende Werkzeug an der Sechskantkontur 6 angreift. Der Eingang 4 des Ventils ist an eine Zuleitung 33 angeschlossen, während sein Ausgang 3 mit dem Aus-laufende 34 der Armatur 30 in Verbindung steht. Die Funktionsweise des oben beschriebenen Magnetventils wird im folgenden dargestellt.

Durch die Sensorelemente 19 und 20 wird ein in den Wirkungsbereich dieser Sensorelemente eintretender Nutzer der Armatur erfaßt und es wird über die Steuerelektronik ein Öffnungsimpuls an den Elektromagneten 12 gegeben. Hierdurch wird entgegen der Kraft einer Feder 23 der Plunger 13 an eine Hubeinstellschraube 24 am oberen Ende des Elektromagneten 12 gezogen. Die Magnetkraft des Permanentmagneten 25 ist so eingestellt, daß sie größer ist als die Kraft der Feder 23, so daß der Plunger 13 auch bei Abschaltung des Erregerstroms in der Anschlagstellung an der Hubeinstellschraube 24 verbleibt.

Durch die Hubbewegung des Plungers 13 wird die Vorsteuerdüse 26 geöffnet. Im geschlossenen Zustand der Vorsteuerdüse 26 herrscht in der Gegendruckkammer 27, die über den Kanal 28 mit dem Ventileingang 4 verbunden ist, ein Überdruck, der die Membran 9 auf dem Ventilsitz 8 festhält. Beim Öffnen der Vorsteuerdüse 26 wird über die Durchbrüche 29.1 und 29.2 die Gegendruckkammer 27 mit dem Ventilausgang 3 verbunden, was zu einem Druckabfall in der Gegendruckkammer 27 führt. Nunmehr hebt der auf die Unterseite der Membran 9 vom Ventileingang 4 her wirkende Wasserdruck die Membran 9 vom Ventilsitz 8 ab, so daß Wasser durch den Ventileingang 4 zum Ventilausgang 3 fließt und weiter über den Auslauf 34 der Armatur 30 dem Nutzer zur Verfügung steht.

Entfernt sich der Nutzer, wird dies von den Sensoren 19, 20 erkannt und es wird von der Steuerelektronik aus ein Ausschaltimpuls umgekehrter Polarität dem Elektromagneten 12 zugeführt. Dadurch wird das Magnetfeld des Permanentmagneten 25 soweit geschwächt, daß die Druckfeder 23 den Plunger 13 aus seiner Anschlußstellung an der Hubeinstellschraube 24 löst und die Vorsteuerdüse 26 mittels der Dichtung 14 wieder geschlossen wird. Nun füllt sich die Gegendruckkammer 27 über den Kanal 28 vom Ventileingang 4 her wieder auf, wobei der daraus resultierende Druckaufbau in der Gegendruckkammer 27 zum Aufsetzen der Membran 9 auf den Ventilsitz 8 und damit zum Schließen des Ventils führt.

## Patentansprüche

1. Magnetventil, insbesondere für sanitäre Armaturen mit einem im wesentlichen topfförmigen Ventilgehäuse (7), das im Bereich seines unverschlossenen Endes einen Befestigungsgewindeabschnitt (5) aufweist, und mit rotationssymmetrisch aufgebauten Ventileingängen (4) und Ventilausgängen (3), die am unverschlossenen Ende des Ventilgehäuses (7) koaxial zueinander und zur Gehäuseachse derart angeordnet sind, daß die Ein- und Ausströmrichtungen entgegengesetzt zueinander ausgerichtet sind, und die im Schließzustand des Ventils durch einen auf einem Ventilsitz (8) aufsitzenden Ventilteller (9) abgedichtet voneinander getrennt sind, und bei dem im Ventilgehäuse im Bereich des verschlossenen Endes eine Elektronik-Leiterplatte (16) angeordnet ist, **dadurch gekennzeichnet, daß** im Ventilgehäuse (7) räumlich zwischen der Elektronik-Leiterplatte (16) und dem Ventilteller (9) mindestens ein im IR-Bereich arbeitendes opto-elektronisches Sensorelement (19, 20) derart angeordnet ist, daß seine Licht-Ein/Austrittsseite in der, mindestens an dieser Stelle für IR-Licht durchlässigen Seitenwand des Ventilgehäuses (7) liegt und alle dem Innenraum des Ventilgehäuses (7) zugewandten Teile des Sensorelements (19, 20) gegen Wasserzutritt abgedichtet sind und das Sensorelement (19, 20) elektrisch mit einer auf der Elektronik-Leiterplatte (16) angeordneten Steuerelektronik verbunden ist.

2. Magnetventil nach Anspruch 1, **dadurch gekennzeichnet, daß** das opto-elektronische Sensorelement (19, 20) innerhalb eines eigenen Sensorgehäuses (18) angeordnet ist, das im Ventilgehäuse (7) so angeordnet ist, daß seine für IR-Licht durchlässige Vorderwand innerhalb eines Ausschnitts (17) der Seitenwand des Ventilgehäuses (17) befestigt ist und die dem Innenraum des Ventilgehäuses (7) zugewandten Teile des Sensorgehäuses (18) gegen Wasserzutritt abgedichtet sind.

3. Magnetventil nach Anspruch 2, **dadurch gekennzeichnet, daß** sowohl die im Sensorgehäuse (18) als auch die auf der Elektronik-Leiterplatte (16) angeordneten opto-elektronischen bzw. elektronischen Bauteile wasserdicht vergossen sind.

4. Magnetventil nach Anspruch 2 oder 3 mit einem im Ventilgehäuse (7) zwischen dem Ventilteller (9) und der Elektronik-Leiterplatte (16) angeordneten elektromagnetischen Steuerteil (12, 13), dessen Durchmesser kleiner ist als der Innendurchmesser des Ventilgehäuses (7), **dadurch gekennzeichnet, daß** das Sensorgehäuse (18) räumlich zwischen dem Steuerteil (12, 13) und der Seitenwand des Ventilgehäuses (7) sowie oberhalb des Steuerteils angeordnet ist.

5. Magnetventil nach einem der Ansprüche 1 bis 4, **dadurch gekennzeichnet, daß** innerhalb des Ventilgehäuses (7) eine Batterie (22.3) zur Energieversorgung der gesamten Ventilsteuerung angeordnet ist.

6. Magnetventil nach Anspruch 4 und 5, **dadurch gekennzeichnet, daß** die Batterie (22.3) oberhalb des Steuerteils (12, 13) angeordnet ist.

7. Magnetventil nach Anspruch 4 und 5, **dadurch gekennzeichnet, daß** mindestens Teile der Batterie (22.3) oder der Batteriehalterung zwischen dem Steuerteil (12, 13) und der Seitenwand des Ventilgehäuses (7) angeordnet sind.

8. Magnetventil nach Anspruch 2, **dadurch gekennzeichnet, daß** im Sensorgehäuse (18) mindestens ein opto-elektronischer Sender (19) und mindestens ein opto-elektronischer Empfänger (20) derart angeordnet sind, daß bei vertikaler Einbaulage des Ventils ihre optischen Achsen um 2° bis 5° aus der horizontalen Richtung nach oben weisen.

9. Magnetventil nach einem der Ansprüche 1 bis 8, **dadurch gekennzeichnet, daß** das Ventilgehäuse ein den Sensor bzw. die Sensoren (19, 20) tragendes kappenartiges Gehäuseoberteil (7) besitzt, das einrastend und abgedichtet auf ein Gehäuseunterteil (1) aufgesetzt ist, welches den Ventilsitz (8) und den Ventilteller (9) enthält und an dessen Unterseite der Ventileingang (4) sowie der Ventilausgang (3) angeordnet sind und das den Befestigungsgewindeabschnitt (5) trägt.

10. Magnetventil nach Anspruch 9, **dadurch gekennzeichnet, daß** auf das Gehäuseunterteil (1) ein mit einer Verzahnung am äußeren Umfang versehener Adapterring (15) einrastend aufgesetzt ist, auf den das mit einer entsprechenden Verzahnung am inneren Umfang versehene kappenartige Gehäuseoberteil (7) in unterschiedlichen Winkelstellungen in bezug auf die Gehäuseachse (2) aufsetzbar ist.

## Claims

1. Magnetic valve, in particular for sanitary fittings, with a substantially barrel-shaped valve housing (7), having a fastening thread section (5) in the region of its unclosed end, and with valve entrances (4) and valve exits (3) constructed as rotationally symmetrical, which are arranged on the unclosed end of the valve housing (7) coaxially to one another and to the axis of the housing in such a way that the directions of flow in and out are aligned as opposed to one another and which are separated from one another and sealed by a valve disc (9) located on top of a valve seat (8) in the closed state of the valve, and in which an electronic conductor plate (16) is arranged in the valve housing in the region of the closed end, **characterised in that** in the valve housing (7) at least one optoelectronic sensor element (19, 20) operating in the IR range is arranged spatially between the electronics conductor plate (16) and the valve disc (9) in such a way that its light entrance/exit side is located in the side wall of the valve housing (7), transparent, at least at this point, to IR light, and all the parts of the sensor element (19, 20) facing the inner space of the valve housing (7) are sealed against the entry of water and the sensor element (19, 20) is electrically connected to control electronics arranged on the electronics conductor plate (16).

2. Magnetic valve according to claim 1, **characterised in that** the optoelectronic sensor element (19, 20) is arranged inside a separate sensor housing (18), arranged in the valve housing (7) in such a way that its front wall, transparent to IR light, is fixed inside a cut-out area (17) of the side wall of the valve housing (7) and the parts of the sensor housing (18) facing the inner space of the valve housing (7) are sealed against the entry of water.

3. Magnetic valve according to claim 2, **characterised in that** both the optoelectronic or electronic components arranged in the sensor housing (18) and those arranged on the electronics conductor plate (16) are cast so as to be watertight.

4. Magnetic valve according to claim 2 or 3 with an electromagnetic control part (12, 13) which is arranged in the valve housing (7) between the valve disc (9) and the electronics conductor plate (16) and the diameter of which is smaller than the inner diameter of the valve housing (7), **characterised in that** the sensor housing (18) is arranged spatially between the control part (12, 13) and the side wall of the valve housing (7) and above the control part.

5. Magnetic valve according to one of claims 1 to 4, **characterised in that** inside the valve housing (7) a battery (22.3) is arranged for supplying energy to the entire valve control system.

6. Magnetic valve according to claim 4 and 5, **characterised in that** the battery (22.3) is arranged above the control part (12, 13).

7. Magnetic valve according to claim 4 and 5, **characterised in that** at least parts of the battery (22.3) or the battery mounting are arranged between the control part (12, 13) and the side wall of the valve housing (7).

8. Magnetic valve according to claim 2, **characterised in that** in the sensor housing (18) at least one optoelectronic transmitter (19) and at least one optoelectronic receiver (20) are arranged in such a way that their optical axes point upwards by 2° to 5° from the horizontal direction when the valve is installed in a vertical position.

9. Magnetic valve according to one of claims 1 to 8, **characterised in that** the valve housing has a cap-like housing upper part (7) bearing the sensor or sensors (19, 20), which is placed so as to lock in and is sealed on top of a housing lower part (1) containing the valve seat (8) and the valve disc (9) and on the underside of which the valve entrance (4) and the valve exit (3) are arranged and which bears the fastening thread section (5).

10. Magnetic valve according to claim 9, **characterised in that** placed on top of the housing lower part (1) so as to lock in is an adapter ring (15), provided with teeth on its outer circumference, on top of which the cap-like housing upper part (7) provided with corresponding teeth on its inner circumference can be placed at different angles in relation to the axis of the housing (2).

## Revendications

1. Valve magnétique, en particulier pour des robinetteries sanitaires, comportant un carter de valve (7) sensiblement en forme de pot qui comprend dans la zone de son extrémité non fermée un tronçon de fixation à pas de vis (5), et comportant des entrées de valve (4) et des sorties de valve (3) conçues à symétrie de révolution qui sont agencées à l'extrémité non fermée du carter de valve (7) coaxialement les unes par rapport aux autres et par rapport à l'axe de carter de telle sorte que les directions d'écoulement rentrant et sortant sont orientées en sens opposés l'une à l'autre, et qui sont séparées avec étanchement les unes des autres dans l'état fermé de la valve par un opercule de valve (9) reposant sur un siège de valve (8), et dans laquelle une carte imprimée électronique (16) est agencée dans le carter de valve dans la zone de l'extrémité fermée, **caractérisée en ce qu'**au moins un élément palpeur optoélectronique (19, 20) opérant dans la plage infrarouge est agencé dans le carter de valve (7) dans l'espace entre la carte imprimée électronique (16) et l'opercule de valve (9), de telle sorte que son côté entrée/sortie de lumière se trouve dans la paroi latérale, perméable à la lumière infrarouge au moins à cet emplacement, du carter de valve (7), et toutes les pièces de l'élément palpeur (19, 20) tournées vers le volume intérieur du carter de valve (7) sont étanchées à l'encontre de la pénétration d'eau, et l'élément palpeur (19, 20) est connecté électriquement à une unité électronique de commande agencée sur la carte imprimée électronique (16).

2. Valve magnétique selon la revendication 1, **caractérisée en ce que** l'élément palpeur optoélectronique (19, 20) est agencé à l'intérieur d'un propre carter de palpeur (18) qui est agencé de telle sorte dans le carter de valve (7) que sa paroi avant perméable à la lumière infrarouge est fixée à l'intérieur d'une découpe (17) de la paroi latérale du carter de valve (7) et les pièces du carter de palpeur (18) tournées vers le volume intérieur du carter de valve (7) sont étanchées à l'encontre de la pénétration d'eau.

3. Valve magnétique selon la revendication 2, **caractérisée en ce qu'**aussi bien les composants optoélectroniques ou électroniques agencés dans le carter de palpeur (18) que ceux agencés sur la carte imprimée électronique (16) sont surmoulés de façon étanche à l'eau.

4. Valve magnétique selon l'une ou l'autre des revendications 2 et 3, comportant un élément de commande électromagnétique (12, 13) agencé dans le carter de valve (7) entre l'opercule de valve (9) et la carte imprimée électronique (16), élément dont le diamètre est inférieur au diamètre intérieur du carter de valve (7), **caractérisée en ce que** le carter de palpeur (18) est agencé dans l'espace entre l'élément de commande (12, 13) et la paroi latérale du carter de valve (7) ainsi qu'au-dessus de l'élément de commande.

5. Valve magnétique selon l'une des revendications 1 à 4, **caractérisée en ce qu'**une batterie (22.3) pour l'alimentation en énergie de la totalité de la commande de valve est agencée à l'intérieur du carter de valve (7).

6. Valve magnétique selon les revendications 4 et 5, **caractérisée en ce que** la batterie (22.3) est agencée au-dessus de l'élément de commande (12, 13).

7. Valve magnétique selon les revendications 4 et 5, **caractérisée en ce que** des parties au moins de la batterie (22.3) ou de la monture de batterie sont agencées entre l'élément de commande (12, 13) et la paroi latérale du carter de valve (7).

8. Valve magnétique selon la revendication 2, **caractérisée en ce qu'**au moins un émetteur optoélectronique (19) et au moins un récepteur optoélectronique (20) sont agencés dans le carter de palpeur (18) de telle sorte que pour une position de montage verticale de la valve leurs axes optiques sont dirigés de 2° à 5° hors de la direction horizontale vers le haut.

9. Valve magnétique selon l'une des revendications 1 à 8, **caractérisée en ce que** le carter de valve possède une partie supérieure de carter (7) en forme de capuchon portant le palpeur ou les palpeurs (19, 20), qui est posé avec enclenchement et avec étanchement sur une partie inférieure de carter (1) qui comprend le siège de valve (8) et l'opercule de valve (9) et sur la face inférieure de laquelle sont prévues l'entrée de valve (4) ainsi que la sortie de valve (3) et qui porte le tronçon de fixation à pas de vis (5).

10. Valve magnétique selon la revendication 9, **caractérisée en ce qu'**une bague d'adaptation (15) pourvue d'une denture à la périphérie extérieure est posée avec enclenchement sur la partie inférieure de carter (1), bague sur laquelle peut venir se poser la partie supérieure de carter (7), en forme de capuchon et pourvue d'une denture correspondante à la périphérie intérieure, dans des positions angulaires différentes par rapport à l'axe de carter (2).
